# EUROPEAN PATENT APPLICATION

(11) **EP 4 335 936 A1**
(43) Date of publication of application: **13.03.2024**
(21) Application number: 22811426.0
(22) Date of filing: 27.05.2022
(51) Int. Cl.: C21D 8/12, C22C 38/00, C22C 38/60, H01F 1/147

(54) **METHOD FOR PRODUCING GRAIN-ORIENTED ELECTROMAGNETIC STEEL SHEET**

(30) Priority: 28.05.2021 JP 2021090680
(71) Applicant: JFE Steel Corporation, Tokyo 100-0011 (JP)
(72) Inventor: IMAMURA, Takeshi, Tokyo 100-0011 (JP); TAKENAKA, Masanori, Tokyo 100-0011 (JP); SHIDARA, Eitaro, Tokyo 100-0011 (JP)
(74) Representative: Hoffmann Eitle
(86) International application number: PCT/JP2022/021831
(87) International publication number: WO 2022/250158

(57) **Abstract**

The present disclosure is to reduce the number of surface defects in a grain-oriented electrical steel sheet. When manufacturing a grain-oriented electrical steel sheet, a steel slab is heated before being subjected to hot rolling. The heating includes a first heating process of heating the steel slab to a temperature of lower than 1300 °C, and a second heating process of heating the steel slab to a temperature of 1300 °C or higher, where the time from the end of the first heating process to the start of the second heating process is 20 seconds or longer, the oxygen concentration in the atmosphere in the second heating process is 1.0 vol% or less, and the surface of the steel slab is subjected to water cooling at a cooling rate of 3.0 °C/s or higher after the second heating process and before the hot rolling.

## Description

### TECHNICAL FIELD

This disclosure relates to a method of manufacturing a grain-oriented electrical steel sheet.

### BACKGROUND

An electrical steel sheet is a material widely used as an iron core of a transformer, a motor, and the like. Electrical steel sheets are broadly classified into grain-oriented electrical steel sheets and non-oriented electrical steel sheets. A grain-oriented electrical steel sheet is characterized by having a texture in which <001> orientation, which is the easy magnetization axis of iron, is highly accorded with the rolling direction of the steel sheet.

Such a texture is formed by secondary recrystallization in final annealing. As used herein, the secondary recrystallization refers to a phenomenon in which crystal grains with {110}<001> orientation, which is called Goss orientation, preferentially grow into large grains by utilizing grain boundary energy.

Atypical technique for causing the secondary recrystallization is to use precipitates called inhibitors. For example, JP S40-15644 B (PTL 1) describes a method of using AlN and MnS, and JP S51-13469 B (PTL 2) describes a method of using MnS and MnSe, as techniques of using inhibitors, and both methods have been put into practical use industrially.

The method of using inhibitors has been widely used in the manufacture of grain-oriented electrical steel sheets because the method can stably develop secondary recrystallized grains. However, to finely disperse the inhibitors in the steel, it is necessary to heat a steel slab in advance to a high temperature of 1300 °C or higher to dissolve the inhibitor components once.

Therefore, a method of manufacturing a grain-oriented electrical steel sheet without using inhibitors (inhibitor-less method) has been proposed (for example, see JP 2000-129356 A (PTL 3)).

The inhibitor-less method is a technique that uses highly purified steel and controls the texture to cause secondary recrystallization. Specifically, this technique elicits the dependency of grain boundary energy of primary recrystallized grains on the grain boundary misorientation angle, to cause the secondary recrystallization of crystal grains with Goss orientation without using inhibitors. This effect is called a texture inhibition effect.

The inhibitor-less method does not require to finely disperse the inhibitors in the steel, thus eliminating the need for high-temperature slab heating, which is essential when using inhibitors. Therefore, the inhibitor-less method has significant advantages not only in terms of manufacturing cost but also in terms of maintenance of manufacturing equipment.

### CITATION LIST

### Patent Literature

PTL 1: JP S40-15644 B
PTL 2: JP S51-13469 B
PTL 3: JP 2000-129356 A

### SUMMARY

### (Technical Problem)

However, not only in the case of using inhibitors that requires high-temperature heating, but also in the case of inhibitor-less method, cracks on the slab surface and corners, and erosion of grain boundaries by scale may remain as surface defects in a final product.

It could thus be helpful to provide a method of manufacturing a grain-oriented electrical steel sheet with which a grain-oriented electrical steel sheet with excellent magnetic properties and few surface defects can be obtained.

### (Solution to Problem)

To solve the above problem, we have studied the influence of the conditions of heating a steel slab and the surface temperature of a steel slab before hot rolling. As a result, we discovered that a grain-oriented electrical steel sheet with excellent magnetic properties and few surface defects can be obtained by heating and rapidly cooling a steel slab under specific conditions. The following describes experiments that led to this discovery. In the present specification, "%" as a unit of oxygen concentration represents "vol%" unless otherwise specified.

### <Experiment 1>

A grain-oriented electrical steel sheet was manufactured by the following processes.

First, a steel slab for grain-oriented electrical steel sheet containing, in mass%, 0.080 % of C, 3.55 % of Si, and 0.12 % of Mn was heated. During the heating, the steel slab was first heated to 1200 °C (first heating process) and then heated to 1400 °C (second heating process). The time from the end of the first heating process to the start of the second heating process was varied.

For comparison, an experiment where the steel slab was heated to 1200 °C and then immediately heated to 1400 °C (without an interval) was also conducted. In this case, the time from the end of the first heating process to the start of the second heating process was 0 seconds.

The oxygen concentration in the furnace was controlled to 0.1 % or less for both the first heating process and the second heating process. After the second heating process and before the subsequent hot rolling, the surface of the steel slab for grain-oriented electrical steel sheet was subjected to water cooling for about 5 seconds at a cooling rate of 15 °C/s to lower the surface temperature of the steel slab by about 75 °C.

Next, the steel slab after the water cooling was subjected to hot rolling, which included rough rolling and finish rolling, to obtain a hot-rolled steel sheet with a thickness of 2.4 mm. Next, pickling was performed to remove scale on the surface of the hot-rolled steel sheet.

Next, the hot-rolled steel sheet after the pickling was subjected to first cold rolling to obtain a thickness of 0.65 mm, and it was subjected to intermediate annealing at 1100 °C for 180 seconds and then to second cold rolling to obtain a cold-rolled steel sheet with a thickness of 0.27 mm. Next, decarburization annealing was performed under conditions of 840 °C × 100 seconds, 50 % H₂ + 50 % N₂, and a dew point of 54 °C.

After the decarburization annealing, the surface of the steel sheet was applied with an annealing separator containing MgO as a main component, and the steel sheet was subjected to final annealing at 1200 °C for 20 hours in a H₂ atmosphere. Next, after removing the unreacted annealing separator remaining on the surface of the steel sheet by water washing, a coating solution containing phosphate as a main component was applied, and the steel sheet was subjected to flattening annealing to bake the coating and flatten the steel sheet. The conditions for the flattening annealing were a temperature of 800 °C and an annealing time of 100 seconds.

Next, the number of surface defects, such as scratches, on the surface of the obtained grain-oriented electrical steel sheet was measured using an eddy current sensor. The measurement was performed on both sides of the grain-oriented electrical steel sheet and for the entire length and width, and the number of surface defects per 100 m length of the grain-oriented electrical steel sheet was determined.

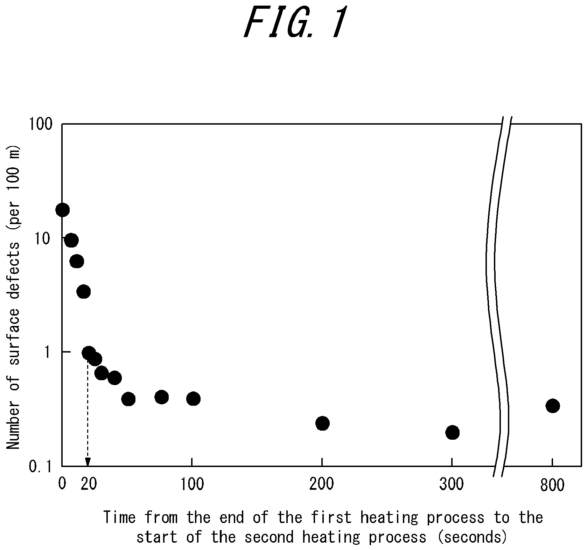

FIG. 1 illustrates the relationship between the time from the end of the first heating process to the start of the second heating process during the slab heating and the number of surface defects. The results in FIG. 1 indicate that the number of surface defects is significantly reduced when the time is 20 seconds or longer.

### <Experiment 2>

A steel slab for grain-oriented electrical steel sheet containing, in mass%, 0.073 % of C, 2.89 % of Si, 0.09 % of Mn, and 0.022 % of Se was heated. During the heating, the steel slab was first heated to 1250 °C (first heating process) and then heated to 1415 °C (second heating process). The time from the end of the first heating process to the start of the second heating process was 120 seconds, the oxygen concentration in the furnace in the first heating process was 0.2 %, and the oxygen concentration in the furnace in the second heating process was varied.

After the second heating process and before the subsequent hot rolling, the surface of the steel slab for grain-oriented electrical steel sheet was subjected to water cooling for about 7 seconds at a cooling rate of 5 °C/s to lower the surface temperature of the steel slab by about 35 °C.

Next, the steel slab after the water cooling was subjected to hot rolling, which included rough rolling and finish rolling, to obtain a hot-rolled steel sheet with a thickness of 2.4 mm. The obtained hot-rolled steel sheet was subjected to hot-rolled sheet annealing at 1000 °C for 15 seconds, and then pickling was performed to remove scale on the surface of the hot-rolled steel sheet.

Next, the hot-rolled steel sheet after the pickling was subjected to first cold rolling to obtain a thickness of 0.50 mm, and it was subjected to intermediate annealing at 1100 °C for 100 seconds and then to second cold rolling to obtain a cold-rolled steel sheet with a thickness of 0.23 mm. Next, decarburization annealing was performed under conditions of 840 °C × 100 seconds, 55 % H₂ + 45 % N₂, and a dew point of 62 °C.

After the decarburization annealing, the surface of the steel sheet was applied with an annealing separator containing MgO as a main component, and the steel sheet was subjected to final annealing at 1250 °C for 5 hours in a H₂ atmosphere. Next, after removing the unreacted annealing separator remaining on the surface of the steel sheet by water washing, a coating solution containing phosphate as a main component was applied, and the steel sheet was subjected to flattening annealing to bake the coating and flatten the steel sheet. The conditions for the flattening annealing were a temperature of 860 °C and an annealing time of 20 seconds.

The number of surface defects, such as scratches, on the surface of the obtained grain-oriented electrical steel sheet was measured with the same method as in Experiment 1 above, and the number of surface defects per 100 m length of the grain-oriented electrical steel sheet was determined.

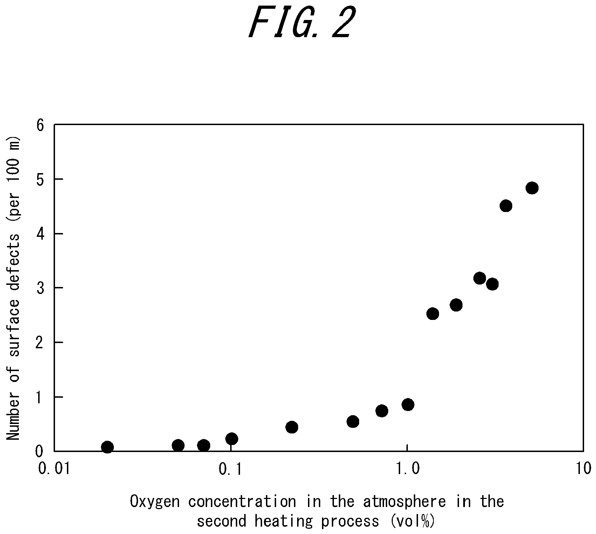

FIG. 2 illustrates the relationship between the oxygen concentration in the atmosphere in the second heating process and the number of surface defects. The results in FIG. 2 indicate that the number of surface defects is significantly reduced when the oxygen concentration is 1.0 % or less.

### <Experiment 3>

A steel slab for grain-oriented electrical steel sheet containing, in mass%, 0.073 % of C, 2.89 % of Si, 0.09 % of Mn, 0.019 % of Al, 0.006 % of N, and 0.018 % of Se was heated. During the heating, the steel slab was first heated to 1150 °C (first heating process) and then heated to 1420 °C (second heating process). The time from the end of the first heating process to the start of the second heating process was 300 seconds.

The oxygen concentration in the furnace was 0.05 % for both the first heating process and the second heating process. After the second heating process and before the subsequent hot rolling, the surface of the steel slab for grain-oriented electrical steel sheet was subjected to water cooling for about 3 seconds at various cooling rates.

Next, the steel slab after the water cooling was subjected to hot rolling, which included rough rolling and finish rolling, to obtain a hot-rolled steel sheet with a thickness of 2.2 mm. The obtained hot-rolled steel sheet was subjected to hot-rolled sheet annealing at 1100 °C for 120 seconds, and then pickling was performed to remove scale on the surface of the hot-rolled steel sheet.

Next, the hot-rolled steel sheet after the pickling was subjected to first cold rolling to obtain a thickness of 1.8 mm, and it was subjected to intermediate annealing at 1100 °C for 120 seconds and then to second cold rolling to obtain a cold-rolled steel sheet with a thickness of 0.23 mm. Next, decarburization annealing was performed under conditions of 840 °C × 180 seconds, 55 % H₂ + 45 % N₂, and a dew point of 60 °C.

After the decarburization annealing, the surface of the steel sheet was applied with an annealing separator containing MgO as a main component, and the steel sheet was subjected to final annealing at 1200 °C for 25 hours in a H₂ atmosphere. Next, after removing the unreacted annealing separator remaining on the surface of the steel sheet by water washing, a coating solution containing phosphate as a main component was applied, and the steel sheet was subjected to flattening annealing to bake the coating and flatten the steel sheet. The conditions for the flattening annealing were a temperature of 850 °C and an annealing time of 120 seconds.

The number of surface defects, such as scratches, on the surface of the obtained grain-oriented electrical steel sheet was measured with the same method as in Experiments 1 and 2 above, and the number of surface defects per 100 m length of the grain-oriented electrical steel sheet was determined.

The magnetic flux density Bs (magnetic flux density when excited at a magnetizing force of 800 A/m) of the obtained grain-oriented electrical steel sheet was measured with a method in accordance with JIS C2550-1 (2011).

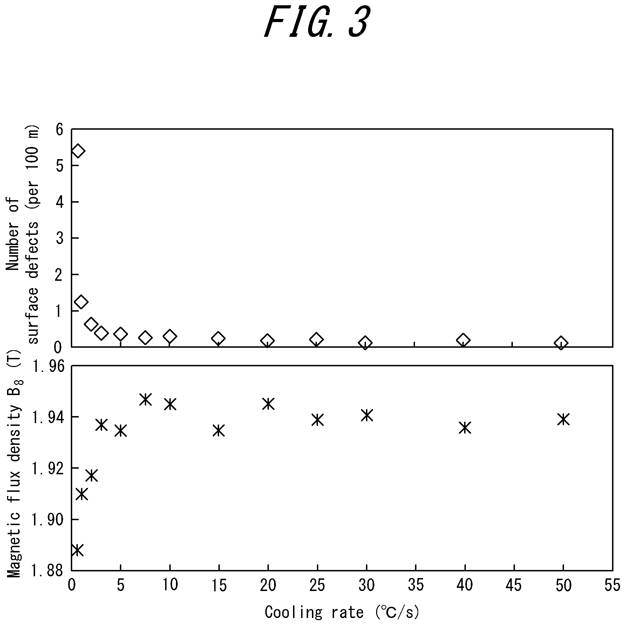

FIG. 3 illustrates the relationship between the cooling rate in the water cooling performed after the second heating process and before the hot rolling, and the number of surface defects and B₈. According to the results in FIG. 3, it can be said that good magnetic properties and surface conditions can be obtained when the cooling rate is 3.0 °C/s or higher.

According to the above experimental results, it is understood that the number of surface defects can be effectively reduced by dividing the heating of the steel slab into a first heating process and a second heating process, and by controlling the time from the end of the first heating process to the start of the second heating process and the oxygen concentration in the atmosphere in the second heating process. Further, it is found that good magnetic properties can be obtained by subjecting the surface of the steel slab for grain-oriented electrical steel sheet to water cooling at a cooling rate of 3.0 °C/s or higher after the second heating process and before the hot rolling. Although the reason for the above is not necessarily clear, we consider as follows.

Surface defects in a grain-oriented electrical steel sheet are mainly caused by hot rolling. For example, when a steel slab is heated with a common method, a temperature difference inevitably occurs between the surface layer and the core layer of the steel slab. As a result, during hot rolling, cracking occurs due to the stress caused by the temperature difference inside the steel slab. However, by dividing the heating of the steel slab into a first heating process and a second heating process and starting the second heating process some time after the end of the first heating process, the temperature difference inside the steel slab is reduced, which can suppress cracking caused by the temperature difference inside the steel slab.

Surface defects are also caused by erosion of grain boundaries by scale on the surface of the steel slab. However, by reducing the oxygen concentration in the atmosphere in the second heating process, it is possible to reduce the amount of scale and control the erosion of grain boundaries by the scale.

Further, the surface of the steel slab is subjected to water cooling after the second heating process and before the hot rolling, which removes scale from the surface of the slab. As a result, surface defects can be reduced. The water cooling also keeps the grain size in the surface layer of the slab fine and increases the grain boundary compared to a case where the slab is not cooled. Strain tends to accumulate at the grain boundaries due to processing such as hot rolling, and the accumulation of strain promotes recrystallization during subsequent annealing, which is thought to improve the recrystallized texture before secondary recrystallization and improve the magnetic properties. However, when the cooling rate is low, the amount of coolant is small, and the discharge rate is also low. As a result, the scale cannot be sufficiently removed, and surface defects increase. In addition, when the cooling rate is low, the structure of the surface layer of the slab is coarsened, and a band-like structure with little strain is formed after hot rolling, which is thought to suppress recrystallization and deteriorate the recrystallized texture. It is considered that in this case, the Goss orientation selectivity during secondary recrystallization is reduced, resulting in a reduced magnetic flux density.

The present disclosure is based on the above findings, and the primary features thereof are as follows.
[1] A method of manufacturing a grain-oriented electrical steel sheet, comprising
   heating a steel slab for grain-oriented electrical steel sheet,
   subjecting the heated steel slab for grain-oriented electrical steel sheet to hot rolling to obtain a hot-rolled steel sheet,
   subjecting the hot-rolled steel sheet to cold rolling once, or twice or more with intermediate annealing performed therebetween, to obtain a cold-rolled steel sheet,
   subjecting the cold-rolled steel sheet to decarburization annealing,
   applying an annealing separator to a surface of the cold-rolled steel sheet after the decarburization annealing, and
   subjecting the cold-rolled steel sheet applied with the annealing separator to final annealing, wherein
   the heating of the steel slab for grain-oriented electrical steel sheet comprises
   a first heating process of heating the steel slab for grain-oriented electrical steel sheet to a temperature of lower than 1300 °C, and
   a second heating process of heating the steel slab for grain-oriented electrical steel sheet to a temperature of 1300 °C or higher, wherein
   time from an end of the first heating process to a start of the second heating process is 20 seconds or longer,
   an oxygen concentration in an atmosphere in the second heating process is 1.0 vol% or less, and
   a surface of the steel slab for grain-oriented electrical steel sheet is subjected to water cooling at a cooling rate of 3.0 °C/s or higher after the second heating process and before the hot rolling.
[2] The method of manufacturing a grain-oriented electrical steel sheet according to aspect [1], wherein the steel slab for grain-oriented electrical steel sheet is arranged so that an under surface of the steel slab for grain-oriented electrical steel sheet in the first heating process is not an under surface in the second heating process.

### (Advantageous Effect)

According to the present disclosure, the number of surface defects in a grain-oriented electrical steel sheet can be reduced.

### BRIEF DESCRIPTION OF THE DRAWINGS

In the accompanying drawings:
FIG. 1 is a graph illustrating the relationship between the time from the end of a first heating process to the start of a second heating process and the number of surface defects;
FIG. 2 is a graph illustrating the relationship between the oxygen concentration in the atmosphere in the second heating process and the number of surface defects; and
FIG. 3 is a graph illustrating the relationship between the cooling rate in water cooling performed after the second heating process and before hot rolling, and the number of surface defects and Bs.

### DETAILED DESCRIPTION

The following describes examples of embodiments the present disclosure in detail. The following provides a description of some of the embodiments of the present disclosure, by way of example only, and the present disclosure is by no means limited to the following embodiments.

### [Steel slab for grain-oriented electrical steel sheet]

In the present disclosure, a steel slab for grain-oriented electrical steel sheet (hereinafter may be simply referred to as "steel slab") is used as a starting material. The steel slab may be a steel slab of any chemical composition without particular limitation.

The steel slab preferably contains the following components. In the following descriptions of chemical composition, "%" refers to "mass%" and "ppm" refers to "mass ppm", respectively, unless otherwise specified.

### C: 0.01 % or more and 0.10 % or less

When the C content is more than 0.10 %, it is difficult to reduce the C content in steel to 0.0035 % or less, where magnetic aging does not occur, even if decarburization annealing is performed. Therefore, the C content is preferably 0.10 % or less. The C content is more preferably 0.06 % or less. On the other hand, when the C content is less than 0.01 %, the grain boundary strengthening effect of C is lost, and defects such as cracks occur in the steel slab, which may hinder the operation. Therefore, the C content is preferably 0.01 % or more. The C content is more preferably 0.03 % or more.

### Si: 2.0 % or more and 5.0 % or less

Si is an effective element for increasing the specific resistance of steel and improving the iron loss properties. When the Si content is less than 2.0 %, the effect is insufficient. Therefore, the Si content is preferably 2.0 % or more. The Si content is more preferably 3.0 % or more. On the other hand, when the Si content exceeds 5.0 %, the workability of the steel deteriorates, which renders rolling difficult. Therefore, the Si content is preferably 5.0 % or less. The Si content is more preferably 3.6 % or less.

### Mn: 0.01 % or more and 0.50 % or less

Mn is an effective element for improving hot workability. When the Mn content is less than 0.01 %, the effect is insufficient. Therefore, the Mn content is preferably 0.01 % or more. The Mn content is more preferably 0.03 % or more. On the other hand, when the Mn content exceeds 0.50 %, the magnetic flux density of the grain-oriented electrical steel sheet decreases. Therefore, the Mn content is preferably 0.50 % or less. The Mn content is more preferably 0.15 % or less.

In a case of using either or both of MnS and MnSe as inhibitors, the chemical composition of the steel slab may further contain either or both of S and Se in a total amount of 0.005 % or more and 0.10 % or less.

In a case of using AlN as an inhibitor, the chemical composition of the steel slab may further contain Al: 0.01 % or more and 0.04 % or less, and N: 0.003 % or more and 0.012 % or less.

On the other hand, in a case of using no inhibitor, it is possible to reduce the contents of Al, N, S, and Se as much as possible and to cause secondary recrystallization of the Goss orientation by the texture inhibition effect. Therefore, it is preferable to reduce the contents of Al, N, S, and Se in the chemical composition of the steel slab to the following ranges.
Al: 0.010 % or less,
N: 0.0060 % or less, and
S and Se: 0.010 % or less in total

From the viewpoint of the texture inhibition effect, the contents of these elements are preferably as low as possible. Therefore, the lower limit of the contents of these elements may be 0 %.

The contents of Al, N, S, and Se are more preferably in the following ranges.
Al: 0 % or more and 0.008 % or less,
N: 0 % or more and 0.0050 % or less, and
S and Se: 0 % or more and less than 0.005 % in total

In one embodiment of the present disclosure, a steel slab having a chemical composition containing
C: 0.01 % to 0.10 %,
Si: 2.0 % to 5.0%,
Mn: 0.01 % to 0.50 %,
Al: 0 % to 0.04 %,
N: 0 % to 0.010 %, and
S and Se: 0 % to 0.10 % in total,
with the balance being Fe and inevitable impurities, may be used.

The chemical composition may further optionally contain at least one selected from the group consisting of
Ni: 0 % to 1.50 %,
Cr: 0 % to 0.50 %,
Cu: 0 % to 0.50 %,
P: 0 % to 0.50 %,
Sb: 0 % to 0.50 %,
Sn: 0 % to 0.50 %,
Bi: 0 % to 0.50 %,
Mo: 0 % to 0.50 %,
B: 0 ppm to 25 ppm,
Nb: 0 % to 0.020 %,
V: 0 % to 0.010 %,
Zr: 0 % to 0.10 %,
Co: 0 % to 0.050 %,
Pb: 0 % to 0.0100 %,
As: 0 % to 0.0200 %,
Zn: 0 % to 0.020 %,
W: 0 % to 0.0100 %,
Ge: 0 % to 0.0050 %, and
Ga: 0 % to 0.0050 %.
The addition of these elements can further improve the magnetic properties. However, if the content exceeds the upper limit, the development of secondary recrystallized grains is suppressed, which, on the contrary, deteriorates the magnetic properties.

Since the above elements are optionally added elements, the lower limit of the content is set to 0 %. However, from the viewpoint of increasing the effect of adding these elements, it is preferable to set the content of each of the elements equal to or higher than the following lower limit.
Ni: 0.01 %,
Cr: 0.01 %,
Cu: 0.01 %,
P: 0.005 %,
Sb: 0.005 %,
Sn: 0.005 %,
Bi: 0.005 %,
Mo: 0.005 %,
B: 2 ppm,
Nb: 0.001 %,
V: 0.001 %,
Zr: 0.001 %,
Co: 0.002 %,
Pb: 0.0001 %,
As: 0.0010 %,
Zn: 0.001 %,
W: 0.0010 %,
Ge: 0.0001 %, and
Ga: 0.0001 %.

The method of manufacturing the steel slab is not particularly limited, and the steel slab may be manufactured with any method. For example, the steel slab can be manufactured by ingot casting or continuous casting using molten steel whose chemical composition has been adjusted to a predetermined chemical composition. It is also possible to manufacture a thin slab or thinner cast steel with a thickness of 100 mm or less by direct casting, and the thin slab or thinner cast steel can then be used as the steel slab.

### [Heating]

First, the steel slab for grain-oriented electrical steel sheet is heated. In the present disclosure, it is important that the heating of the steel slab for grain-oriented electrical steel sheet should include a first heating process of heating the steel slab for grain-oriented electrical steel sheet to a temperature of lower than 1300 °C, and a second heating process of heating the steel slab for grain-oriented electrical steel sheet to a temperature of 1300 °C or higher, where the time from the end of the first heating process to the start of the second heating process is 20 seconds or longer. When the time from the end of the first heating process to the start of the second heating process is shorter than 20 seconds, the number of surface defects cannot be sufficiently reduced.

On the other hand, the lower limit of the heating temperature in the first heating process is not particularly limited, but it is preferable to set the temperature to 1100 °C or higher to obtain a uniform microstructure. The upper limit of the heating temperature in the second heating process is not particularly limited, but it is preferable to set the temperature to 1460 °C or lower because the slab begins to melt when the temperature exceeds the melting point. Although the upper limit of the time from the end of the first heating process to the start of the second heating process is not particularly limited, it is preferable to set the time to 1200 seconds or shorter to suppress a drop in temperature and reduce the load of the second heating process.

Further, it is important in the present disclosure that the oxygen concentration in the atmosphere in the second heating process should be 1.0 % or less. When the oxygen concentration is more than 1.0 %, the number of surface defects cannot be sufficiently reduced. On the other hand, from the viewpoint of reducing the amount of scale, the oxygen concentration is desirably as low as possible. Therefore, the lower limit of the oxygen concentration is not particularly limited, and it may be 0 %.

Although the oxygen concentration in the atmosphere in the first heating process is not particularly limited, the oxygen concentration in the atmosphere in the first heating process is also preferably 1.0 % or less from the viewpoint of further suppressing the occurrence of surface defect. On the other hand, from the viewpoint of reducing the amount of scale, the oxygen concentration is desirably as low as possible. Therefore, the lower limit of the oxygen concentration is not particularly limited, and it may be 0 %.

During the heating of the steel slab, the steel slab for grain-oriented electrical steel sheet is preferably arranged so that the under surface of the steel slab for grain-oriented electrical steel sheet in the first heating process is not the under surface in the second heating process. Usually, the steel slab is supported from the underside by a support member, such as a transfer skid, during the heating process. Therefore, surface defects are likely to occur on the under surface of the steel slab which is in contact with the support member. By changing the direction of the steel slab between the first heating process and the second heating process as described above, surface defects can be further reduced. The reason is considered as follows. By changing the direction of the steel slab, it is possible to prevent the same surface of the steel slab from contacting the support member for a long time and prevent coarsening of defects. Typically, the steel slab for grain-oriented electrical steel sheet may be arranged so that the under surface of the steel slab for grain-oriented electrical steel sheet in the first heating process becomes the upper surface or the side surface in the second heating process.

After the second heating process and before the hot rolling, the surface of the steel slab for grain-oriented electrical steel sheet is subjected to water cooling at a cooling rate of 3.0 °C/s or higher. When the cooling rate is lower than 3.0 °C/s, the number of surface defect cannot be sufficiently reduced, and excellent magnetic properties cannot be obtained. On the other hand, the cooling rate is desirably as high as possible from the viewpoint of reducing surface defects and improving magnetic properties, so that the upper limit of the cooling rate is not particularly limited. However, an excessively high cooling rate requires excessively large cooling equipment. Therefore, the cooling rate is preferably 300 °C/s or lower from the viewpoint of equipment cost. The time for water cooling is not particularly limited, but it is preferably 0.5 seconds or longer from the viewpoint of enhancing the effect of water cooling. Water cooling for longer than 15.0 seconds may excessively cool the surface temperature of the slab and cause cracks. Therefore, the time for water cooling is preferably 15.0 seconds or shorter. The range of decrease in the surface temperature of the steel slab during the water cooling is not particularly limited. However, from the viewpoint of reducing the load in the subsequent hot rolling, it is preferably 200 °C or less, more preferably 150 °C or less, and even more preferably 100 °C or less.

### [Hot rolling]

Next, the steel slab is subjected to hot rolling to obtain a hot-rolled steel sheet. The hot rolling can be performed under any conditions. From the viewpoint of controlling the microstructure of the hot-rolled steel sheet, it is preferable to perform at least one pass of rough rolling at 1100 °C or higher and 1300 °C or lower and then perform at least two passes of finish rolling at 800 °C or higher and 1100 °C or lower during the hot rolling.

After the hot rolling, the obtained hot-rolled steel sheet may be coiled into a coil shape. From the viewpoint of both of control of carbide structure and prevention of defects such as cracks, the coiling temperature is preferably 400 °C or higher during the coiling. The coiling temperature is preferably 750 °C or lower. The coiling temperature is more preferably 500 °C or higher. The coiling temperature is more preferably 700 °C or lower.

Further, it is preferable to subject the obtained hot-rolled steel sheet to hot-rolled sheet annealing. By performing hot-rolled sheet annealing, it is possible to make the microstructure of the steel sheet uniform and reduce variations in the magnetic properties of the finally obtained grain-oriented electrical steel sheet. From the viewpoint of microstructure uniformity, the annealing temperature is preferably 800 °C or higher during the hot-rolled sheet annealing. The annealing temperature is preferably 1250 °C or lower. The annealing temperature is more preferably 900 °C or higher. The annealing temperature is more preferably 1150 °C or lower. Similarly, from the viewpoint of microstructure uniformity, it is preferable to hold the steel sheet at that temperature after heating the steel sheet to the heating temperature during the hot-rolled sheet annealing. During the holding, the holding time is preferably 5 seconds or longer. The holding time is more preferably 10 seconds or longer. The holding time is more preferably 180 seconds or shorter. After holding the steel sheet at that temperature, the steel sheet may be cooled. From the viewpoint of morphological control of a second phase and precipitates, the cooling rate in a temperature range of 800 °C to 350 °C is preferably 5 °C/s or higher. The cooling rate is preferably 100 °C/s or lower. The cooling rate is more preferably 15 °C/s or higher. The cooling rate is more preferably 45 °C/s or lower.

Next, it is preferable to descale the hot-rolled steel sheet to remove the scale formed on the surface of the steel sheet during hot rolling. The method of descaling is not particularly limited, and any method may be used. Examples thereof include a method using heated acid and a method of mechanically removing scale.

### [Cold rolling]

Next, the hot-rolled steel sheet is subjected to cold rolling once, or twice or more with intermediate annealing performed therebetween, to obtain a cold-rolled steel sheet. The cold rolling can be performed under any conditions.

During the cold rolling, it is preferable to use lubricant such as rolling oil to reduce the rolling load and improve the rolling shape. From the viewpoint of obtaining a good recrystallized texture before secondary recrystallization, the total rolling reduction in the last cold rolling of the cold rolling process (hereinafter referred to as "final cold rolling") is preferably 50 % or more. The total rolling reduction is preferably 92 % or less.

In the case of performing intermediate annealing, it is preferable to hold the steel sheet in a temperature range of 800 °C or higher and 1250 °C or lower for at least 5 seconds during the intermediate annealing, from the viewpoint of microstructure control. From the viewpoint of morphological control of a second phase and precipitates, the cooling rate from 800 °C to 350 °C is preferably 5 °C/s or higher during cooling after the holding. The cooling rate is preferably 100 °C/s or lower. The cooling rate is more preferably 15 °C/s or higher. The cooling rate is more preferably 45 °C/s or lower.

The rolled steel sheet may be coated with rolling oil. Therefore, in the case of performing intermediate annealing, it is preferable to perform degreasing prior to the intermediate annealing to remove the rolling oil. After the intermediate annealing, it is preferable to perform descaling to remove the scale formed on the surface of the steel sheet. The method of descaling is not particularly limited, and any method may be used. Examples thereof include a method using heated acid and a method of mechanically removing scale.

The obtained cold-rolled steel sheet is preferably subjected to either or both of degreasing and pickling prior to the subsequent decarburization annealing to clean the surface.

### [Decarburization annealing]

Next, the cold-rolled steel sheet is subjected to decarburization annealing. The decarburization annealing can be performed under any conditions. In the decarburization annealing, it is preferable to hold the steel sheet in a temperature range of 750 °C or higher and 950 °C or lower for at least 10 seconds, and it is more preferable to hold the steel sheet in a temperature range of 800 °C or higher and 900 °C or lower for at least 10 seconds. The decarburization annealing is preferably performed in a wet atmosphere containing H₂ and N₂. In part or all of the decarburization annealing, the dew point of the wet atmosphere is preferably 20 °C or higher. The dew point is preferably 80 °C or lower. The dew point is more preferably 40 °C or higher. The dew point is more preferably 70 °C or lower.

### [Application of annealing separator]

Next, an annealing separator is applied to the surface of the cold-rolled steel sheet after the decarburization annealing. Any annealing separator may be used without any particular limitation. The annealing separator is preferably, for example, an annealing separator containing MgO, and it is more preferably an annealing separator containing MgO as a main component. The content of MgO in the annealing separator is preferably 60 mass% or more.

Although the application of the annealing separator is not particularly limited, it is generally preferable to apply it to both surfaces of the cold-rolled steel sheet. The amount of the annealing separator applied is not particularly limited, but the amount of the annealing separator applied to each surface is preferably 2.5 g/m² or more. The upper limit of the amount is not particularly limited, but the amount of the annealing separator applied to each surface is preferably 15.0 g/m² or less.

The annealing separator may be applied with a wet method or a dry method. When it is applied with a wet method, for example, a slurry containing MgO can be applied. When it is applied with a dry method, for example, the annealing separator can be applied by electrostatic coating. When applying the slurry, it is preferable to set the slurry temperature at a constant temperature of 5 °C or higher and 30 °C or lower to suppress an increase in viscosity. To obtain a uniform slurry concentration, it is preferable to prepare the slurry in a tank for blending and then offer the slurry for application from a tank separate from the tank for blending.

### [Final annealing]

Next, the cold-rolled steel sheet applied with the annealing separator is subjected to final annealing to develop secondary recrystallized grains and form a forsterite film. The final annealing can be performed under any conditions.

The final annealing is typically performed with the cold-rolled steel sheet, on which the annealing separator has been applied, coiled. Since the final annealing generally takes a long time, it is preferable to upend the coil during the annealing. As used herein, the "upend" means that the central axis of the coil is made in the vertical direction. Further, it is preferable to wind a band or the like around the coil to prevent the coil from unwinding during the annealing.

From the viewpoint of completing the secondary recrystallization, the annealing temperature in the final annealing is preferably 800 °C or higher. Further, from the viewpoint of sufficient formation of forsterite film, the annealing temperature is preferably 1050 °C or higher. On the other hand, the upper limit of the annealing temperature in the final annealing is not particularly limited. However, the annealing temperature is preferably 1300 °C or lower from the viewpoint of preventing coil buckling.

The final annealing can also serve as purification annealing to remove inhibitor-forming elements and other substances from the steel. To remove the inhibitor-forming elements and reduce iron loss, it is preferable to hold the steel sheet at an annealing temperature of 1050 °C or higher and 1300 °C or lower for at least 3 hours. In this case, it is preferable to introduce an atmosphere containing H₂ in part or all of the temperature range of 800 °C or higher.

After the final annealing, it is preferable to remove the annealing separator remaining on the surface of the steel sheet. The annealing separator can be removed by, for example, water washing, brushing, or pickling.

From the viewpoint of further reducing iron loss, it is preferable to further subject the grain-oriented electrical steel sheet to flattening annealing after the final annealing.

Since grain-oriented electrical steel sheets are often used in a laminated state, it is preferable to form an insulating coating on the surface of the grain-oriented electrical steel sheet to ensure insulation. Any coating with insulating properties can be used as the insulating coating. From the viewpoint of further reducing iron loss, the insulating coating is preferably a tension coating capable of imparting tension to the steel sheet.

The method of forming the insulating coating is not particularly limited, and any method may be used. Generally, an insulating coating can be formed by applying a coating solution to the surface of the grain-oriented electrical steel sheet and baking it. The coating solution may be applied before flattening annealing and baked by flattening annealing. From the viewpoint of improving the adhesion of the insulating coating and further reducing iron loss, the insulating coating may be provided via a binder. From the same point of view, it is also possible to vapor-deposit an inorganic material on the surface layer of the steel sheet with a physical vapor deposition method or a chemical vapor deposition method to form an insulating coating.

### EXAMPLES

### (Example 1)

A steel slab for grain-oriented electrical steel sheet containing, in mass%, 0.055 % of C, 3.08 % of Si, 0.05 % of Mn, and 0.025 % of Se was heated. During the heating, the steel slab was first heated to 1270 °C (first heating process) and then heated to 1430 °C (second heating process). The time from the end of the first heating process to the start of the second heating process was varied as listed in Table 1. The oxygen concentration in the atmosphere in the first heating process was 0.04 %, and the oxygen concentration in the atmosphere in the second heating process was varied as listed in Table 1.

After the second heating process and before the subsequent hot rolling, the surface of the steel slab for grain-oriented electrical steel sheet was subjected to water cooling for about 3 seconds. The water cooling was performed at various cooling rates as listed in Table 1.

Next, the steel slab after the water cooling was subjected to hot rolling, which included rough rolling and finish rolling, to obtain a hot-rolled steel sheet with a thickness of 2.0 mm. Next, pickling was performed to remove scale on the surface of the hot-rolled steel sheet.

Next, the hot-rolled steel sheet after the pickling was subjected to first cold rolling to obtain a thickness of 0.48 mm, and it was subjected to intermediate annealing at 1020 °C for 180 seconds and then to second cold rolling to obtain a cold-rolled steel sheet with a thickness of 0.23 mm.

Next, the cold-rolled steel sheet was subjected to decarburization annealing under conditions of 840 °C × 120 seconds, 45 % H₂ + 55 % N₂, and a dew point of 50 °C.

After the decarburization annealing, the surface of the steel sheet was applied with an annealing separator containing MgO as a main component, and the steel sheet was subjected to final annealing at 1200 °C for 10 hours in a H₂ atmosphere. Next, after removing the unreacted annealing separator remaining on the surface of the steel sheet by water washing, a coating solution mainly composed of phosphate was applied, and the steel sheet was subjected to flattening annealing to bake the coating and flatten the steel sheet. The conditions for the flattening annealing were an annealing temperature of 870 °C and an annealing time of 20 seconds.

The number of surface defects, such as scratches, on the surface of the obtained grain-oriented electrical steel sheet was measured using an eddy current sensor. The measurement was performed for the entire length and width of the grain-oriented electrical steel sheet, and the number of surface defects per 100 m length of the grain-oriented electrical steel sheet was determined. The measurement results are listed in Table 1.

The magnetic flux density Bs (magnetic flux density when excited at a magnetizing force of 800 A/m) of the obtained grain-oriented electrical steel sheet was measured with a method in accordance with JIS C2550-1 (2011). The measurement results are listed in Table 1.

The results listed in Table 1 indicate that according to the method of the present disclosure, it is possible to obtain a grain-oriented electrical steel sheet with excellent magnetic properties and few surface defects.

### [Table 1]

**Table 1**

| No. | Time from end of first heating process to start of second heating process | Oxygen concentration in second heating process | Cooling rate | Magnetic flux density B₈ | Number of surface defects | Remarks |
|---|---|---|---|---|---|---|
| | second | vol% | °C/s | T | per 100m | |
| 1 | **10** | 0.02 | **1.5** | 1.910 | 5.6 | **Comparative Example** |
| 2 | **10** | 0.02 | 10 | 1.944 | 2.4 | **Comparative Example** |
| 3 | **10** | 0.02 | 30 | 1.946 | 2.5 | **Comparative Example** |
| 4 | **10** | 0.1 | **1.5** | 1.908 | 6.2 | **Comparative Example** |
| 5 | **10** | 0.1 | 10 | 1.946 | 5.5 | **Comparative Example** |
| 6 | **10** | 0.1 | 30 | 1.945 | 4.4 | **Comparative Example** |
| 7 | **10** | 0.6 | **1.5** | 1.912 | 5.3 | **Comparative Example** |
| 8 | **10** | 0.6 | 10 | 1.938 | 6.6 | **Comparative Example** |
| 9 | **10** | 0.6 | 30 | 1.941 | 3.1 | **Comparative Example** |
| 10 | **10** | **1.5** | **1.5** | 1.902 | 13.2 | **Comparative Example** |
| 11 | **10** | **1.5** | 10 | 1.940 | 12.5 | **Comparative Example** |
| 12 | **10** | **1.5** | 30 | 1.936 | 10.9 | **Comparative Example** |
| 13 | 50 | 0.02 | **1.5** | 1.899 | 6.2 | **Comparative Example** |
| 14 | 50 | 0.02 | 10 | 1.947 | 0.2 | Example |
| 15 | 50 | 0.02 | 30 | 1.940 | 0.2 | Example |
| 16 | 50 | 0.1 | **1.5** | 1.903 | 7.1 | Comparative Example |
| 17 | 50 | 0.1 | 10 | 1.947 | 0.3 | Example |
| 18 | 50 | 0.1 | 30 | 1.949 | 0.3 | Example |
| 19 | 50 | 0.6 | **1.5** | 1.904 | 6.4 | **Comparative Example** |
| 20 | 50 | 0.6 | 10 | 1.947 | 0.6 | Example |
| 21 | 50 | 0.6 | 30 | 1.947 | 0.7 | Example |
| 22 | 50 | **1.5** | **1.5** | 1.915 | 11.1 | **Comparative Example** |
| 23 | 50 | **1.5** | 10 | 1.945 | 10.9 | **Comparative Example** |
| 24 | 50 | **1.5** | 30 | 1.941 | 10 | **Comparative Example** |
| 25 | 360 | 0.02 | **1.5** | 1.897 | 4.7 | **Comparative Example** |
| 26 | 360 | 0.02 | 10 | 1.942 | 0.2 | Example |
| 27 | 360 | 0.02 | 30 | 1.944 | 0.3 | Example |
| 28 | 360 | 0.1 | **1.5** | 1.906 | 2.2 | **Comparative Example** |
| 29 | 360 | 0.1 | 10 | 1.946 | 0.2 | Example |
| 30 | 360 | 0.1 | 30 | 1.942 | 0.2 | Example |
| 31 | 360 | 0.6 | **1.5** | 1.905 | 3.4 | **Comparative Example** |
| 32 | 360 | 0.6 | 10 | 1.942 | 0.5 | Example |
| 33 | 360 | 0.6 | 30 | 1.950 | 0.6 | Example |
| 34 | 360 | **1.5** | **1.5** | 1.912 | 9.8 | **Comparative Example** |
| 35 | 360 | **1.5** | 10 | 1.948 | 9.5 | **Comparative Example** |
| 36 | 360 | **1.5** | 30 | 1.945 | 10.2 | **Comparative Example** |

### (Example 2)

A steel slab for grain-oriented electrical steel sheet containing, in mass%, 0.027 % of C, 3.25 % of Si, 0.10 % of Mn, 0.009 % of Se, 0.005 % of S, 0.025 % of Al, and 0.009 % of N was heated. During the heating, the steel slab was first heated to 1200 °C (first heating process) and then heated to 1400 °C (second heating process). The time from the end of the first heating process to the start of the second heating process was varied as listed in Table 2. The oxygen concentration in the atmosphere in the first heating process was 0.04 %, and the oxygen concentration in the atmosphere in the second heating process was 0.03 %.

In Examples No. 37 to 41, the direction of the steel slab was not changed between the first heating process and the second heating process. In other words, the steel slab was arranged so that the under surface of the steel slab in the first heating process was also the under surface in the second heating process. On the other hand, in Examples No. 42 to 46, the direction of the steel slab was changed between the first heating process and the second heating process. Specifically, the steel slab was arranged so that the under surface of the steel slab in the first heating process became the side surface in the second heating process.

After the second heating process and before the subsequent hot rolling, the surface of the steel slab for grain-oriented electrical steel sheet was subjected to water cooling for 1.5 seconds at a cooling rate of 100 °C/s.

Next, the steel slab after the water cooling was subjected to hot rolling, which included rough rolling and finish rolling, to obtain a hot-rolled steel sheet with a thickness of 3.0 mm. Next, pickling was performed to remove scale on the surface of the hot-rolled steel sheet, and then hot-rolled sheet annealing was performed at 975 °C for 10 seconds.

Next, the hot-rolled steel sheet after the pickling was subjected to first cold rolling to obtain a thickness of 1.6 mm, and it was subjected to intermediate annealing at 1150 °C for 20 seconds and then to second cold rolling to obtain a cold-rolled steel sheet with a thickness of 0.23 mm. Next, decarburization annealing was performed under conditions of 840 °C × 9 seconds, 50 % H₂ + 50 % N₂, and a dew point of 50 °C.

After the decarburization annealing, the surface of the steel sheet was applied with an annealing separator containing MgO as a main component, and the steel sheet was subjected to final annealing at 1200 °C for 10 hours in a H₂ atmosphere. Next, after removing the unreacted annealing separator remaining on the surface of the steel sheet by water washing, a coating solution mainly composed of phosphate was applied, and the steel sheet was subjected to flattening annealing at 870 °C for 20 seconds to bake the coating and flatten the steel sheet.

The number of surface defects and the magnetic flux density Bs of the obtained grain-oriented electrical steel sheet were measured in the same manner as in Example 1. The measurement results are listed in Table 2.

The results listed in Table 2 indicate that according to the method of the present disclosure, it is possible to obtain a grain-oriented electrical steel sheet with excellent magnetic properties and few surface defects. Especially, it is understood that, when the steel slab for grain-oriented electrical steel sheet is arranged so that the under surface of the steel slab for grain-oriented electrical steel sheet in the first heating process is not the under surface in the second heating process, the number of surface defects can be further reduced.

### [Table 2]

**Table 2**

| No. | Slab arrangement in heating process | Time from end of first heating process to start of second heating process | Magnetic flux density B₈ | Number of surface defects | Remarks |
|---|---|---|---|---|---|
| | | second | T | per 100m | |
| 37 | First heating process: under surface ↓ Second heating process: under surface | **10** | 1.938 | 4.8 | **Comparative Example** |
| 38 | | 25 | 1.950 | 0.6 | Example |
| 39 | | 75 | 1.947 | 0.4 | Example |
| 40 | | 200 | 1.946 | 0.4 | Example |
| 41 | | 500 | 1.949 | 0.2 | Example |
| 42 | First heating process: under surface ↓ Second heating process: side surface | **10** | 1.935 | 3.2 | **Comparative Example** |
| 43 | | 25 | 1.941 | 0.5 | Example |
| 44 | | 75 | 1.947 | 0.3 | Example |
| 45 | | 200 | 1.947 | 0.2 | Example |
| 46 | | 500 | 1.945 | 0.1 | Example |

## Claims

1. A method of manufacturing a grain-oriented electrical steel sheet, comprising
heating a steel slab for grain-oriented electrical steel sheet,
subjecting the heated steel slab for grain-oriented electrical steel sheet to hot rolling to obtain a hot-rolled steel sheet,
subjecting the hot-rolled steel sheet to cold rolling once, or twice or more with intermediate annealing performed therebetween, to obtain a cold-rolled steel sheet,
subjecting the cold-rolled steel sheet to decarburization annealing,
applying an annealing separator to a surface of the cold-rolled steel sheet after the decarburization annealing, and
subjecting the cold-rolled steel sheet applied with the annealing separator to final annealing, wherein
the heating of the steel slab for grain-oriented electrical steel sheet comprises
a first heating process of heating the steel slab for grain-oriented electrical steel sheet to a temperature of lower than 1300 °C, and
a second heating process of heating the steel slab for grain-oriented electrical steel sheet to a temperature of 1300 °C or higher, wherein
time from an end of the first heating process to a start of the second heating process is 20 seconds or longer,
an oxygen concentration in an atmosphere in the second heating process is 1.0 vol% or less, and
a surface of the steel slab for grain-oriented electrical steel sheet is subjected to water cooling at a cooling rate of 3.0 °C/s or higher after the second heating process and before the hot rolling.

2. The method of manufacturing a grain-oriented electrical steel sheet according to claim 1, wherein the steel slab for grain-oriented electrical steel sheet is arranged so that an under surface of the steel slab for grain-oriented electrical steel sheet in the first heating process is not an under surface in the second heating process.
